# EUROPEAN PATENT SPECIFICATION

(11) **EP 3 975 612 B1**
(45) Date of publication and mention of the grant of the patent: **11.10.2023**
(21) Application number: 19949432.9
(22) Date of filing: 14.10.2019
(51) Int. Cl.: H04W 28/18, H04L 5/00, H04W 24/02

(54) **LINK PROCESSING METHODS**
VERBINDUNGSVERARBEITUNGSVERFAHREN
PROCÉDÉS DE TRAITEMENT DE LIAISON

(43) Date of publication of application: 30.03.2022
(73) Proprietor: Shenzhen Goodix Technology Co., Ltd., Shenzhen, Guangdong 518045 (CN)
(72) Inventor: CHEN, Gang, Shenzhen, Guangdong 518045 (CN); ZOU, Jinghua, Shenzhen, Guangdong 518045 (CN)
(74) Representative: Elzaburu S.L.P.
(86) International application number: PCT/CN2019/110934
(87) International publication number: WO 2021/072573

(56) References cited:
- CN-A- 101 374 253
- CN-A- 101 557 625
- US-A1- 2006 089 748
- US-A1- 2014 064 212
- US-A1- 2017 265 101
- Bluetooth Sig: "Bluetooth Core Specification V5.1", , 21 January 2019 (2019-01-21), pages 1-2985, XP055920965, Retrieved from the Internet: URL:https://www.bluetooth.com/specificatio ns/specs/core-specification-5-1/ [retrieved on 2019-06-20]
- Bluetooth Sig V5: "Bluetooth Core Specification V5.1", , 21 January 2019 (2019-01-21), pages 1-2985, XP055920979, Retrieved from the Internet: URL:https://www.bluetooth.com/specificatio ns/specs/core-specification-5-1/ [retrieved on 2019-06-20]

## Description

### TECHNICAL FIELD

The present application relates to the field of communication technology, and particularly relates to a link processing.

### BACKGROUND

The two most important resources in wireless communication, time domain resources and frequency domain resources, can respectively correspond to Time Division Duplexing (TDD) technology and Frequency Division Duplexing (FDD) technology. Among them, the TDD technology is widely used in every field in wireless communication systems, for example in network topological structures of multi-link primary-secondary devices in 3G, 4G, and wireless personal area network (WPAN) systems, the TDD technology may usually be used.

In the network topological structure of a multi-link primary-secondary device, a primary device can be connected to multiple secondary devices. For the primary device, time-frequency resources and baseband resources are limited, which requires time division multiplexing of the communication time between the primary device and the multiple secondary devices.

However, in a multi-connection application scenario, a device that maintains multiple connections may have scheduling conflicts among its links, which will reduce stability of the links.

The document entitled "Bluetooth Core Specification V5.1" discloses specific procedures for updating connection parameters between a master device and a slave device.

US2014/064212A1 discloses a method for preventing coexistence interference between a Bluetooth Low Energy (BLE) radio and a collocated LTE radio.

US2017/0265101A1 discloses a network device serving two or more networks using periodic times slots for transmission events is configured to determine that one of the periodic time slots on one of the networks has or soon will collide with one of the periodic time slots on the other network by processing time stamps for events on each network.

### SUMMARY

The invention is carried out according to the appended independent claims. Optional features of the invention are carried out according to the dependent claims. The present application can reasonably arrange the scheduling of multiple links, thus avoiding scheduling conflicts among the links and improving stability of the links, as well as optimizing bandwidth duty cycles of respective links, and improving utilization of bandwidth resources.

### BRIEF DESCRIPTION OF THE DRAWINGS

In order to explain the present application embodiment or the technical solution in the prior art more clearly, the following will briefly introduce the drawings that need to be used in the description of the embodiments or the prior art. Obviously, the drawings in the following description are some embodiments of the present application. For those of ordinary skill in the art, other drawings can be obtained based on these drawings without paying creative labor.
FIG. 1 is a schematic diagram of an application scenario of the present application.
FIG. 2 is a schematic diagram of another application scenario of the present application.
FIG. 3 is a flowchart of a link processing method provided by a first embodiment of the present application.
FIG. 4 is a schematic diagram of connection intervals of multiple links in an embodiment of the present application.
FIG. 5 is a schematic diagram of movement of an anchor point in multiple links in an embodiment of the present application.
FIG. 6 is a schematic diagram of communication time in a link processing method of the present application.
FIG. 7 is a schematic diagram of communication time in another link processing method of the present application.
FIG. 8 is a schematic diagram of communication time in still another link processing method of the present application.
FIG. 9 is a schematic diagram of communication time in still another link processing method of the present application.
FIG. 10 is a flowchart of a link processing method provided by a second embodiment of the present application.
FIG. 11 is a schematic diagram of a network topological structure provided by the second embodiment of the present application.
FIG. 12 is a flowchart of a link processing method provided by a third embodiment of the present application.
FIG. 13 is a schematic diagram of a network topological structure provided by the third embodiment of the present application.
FIG. 14 is a flowchart of a link processing method provided by a fourth embodiment of the present application.
FIG. 15 is a flowchart of a link processing method provided by a fifth embodiment of the present application.
FIG. 16 is a flowchart of a link processing method provided by a sixth embodiment of the present application.
FIG. 17 is a flow sequence diagram of a link processing method provided by a seventh embodiment of the present application.
FIG. 18 is a flow sequence diagram of a link processing method provided by an eighth embodiment of the present application.
FIG. 19 is a schematic structural diagram of a first device provided by the ninth embodiment of the present application.
FIG. 20 is a schematic structural diagram of a second device provided by the tenth embodiment of the present application.
FIG. 21 is a schematic structural diagram of a first device provided by the eleventh embodiment of the present application.
FIG. 22 is a schematic structural diagram of a second device provided by the twelfth embodiment of the present application.

Through the above-mentioned figures, embodiments of the present disclosure have been clearly shown, and a more detailed description will be given herein. These figures and text descriptions are not intended to limit scope of concepts of the present disclosure in any way, but to explain concepts mentioned in the present disclosure for those skilled in the art by referring to specific embodiments.

### DETAILED DESCRIPTION OF EMBODIMENTS

In order to make objects, technical solutions, and advantages of embodiments of the present application clearer, the technical solutions in the embodiments of the present application will be described clearly and comprehensively in conjunction with figures in the embodiments of the present application. Obviously, the described embodiments are part of embodiments of the present application, but not all of embodiments. Based on the embodiments in the present application, all other embodiments obtained by those of ordinary skill in the art without paying creative labor shall fall within scope of protection of the present application.

Terms "first", "second", "third", "fourth", etc. (if any) in the description, claims and the above-mentioned figures of the present application are used to distinguish similar objects, but not necessarily used to describe a specific order or sequence. It should be understood that data used in this way can be interchanged under appropriate circumstances so that the embodiments of the present application described herein can be implemented in a sequence other than those shown or described in the figures herein. In addition, terms "include" and "have" and any variations of them are meant to cover non-exclusive inclusion. For example, processes, methods, systems, products, or devices that include a series of steps or units are not necessarily limited to those clearly listed steps or units, but may include those that are not clearly listed or other steps or units inherent to these processes, methods, products, or devices.

The technical solutions of the present application will be described in detail herein with specific embodiments. The following specific embodiments can be combined with each other, and the same or similar concepts or processes may not be repeated in some embodiments.

The link processing method, device, electronic device, and storage medium provided by the following embodiments of the present application can be applied to a multi-link network topological structure in a communication system such as 3G, 4G, or WPAN using the TDD technology. The network topological structure includes a first device and two or more second devices. The first device and the second device are communicatively connected with through an independent link. Data can be exchanged among respective devices, and the respective devices can also connect with a network device such as a high-level network device or a network device in Internet, etc. At least one second device may be connected to the first device. In WPAN, the first device is, for example, a mobile phone, a tablet computer, etc. The second device may be, for example, a wireless headset, a smart watch, or other data sensors. In WPAN, the first device and each second device may be communicatively connected with through an independent link, the first device and the each second device on the link can pass Wireless-Fidelity (WiFi for short), Infrared Data Organization (IrDA for short), Bluetooth, Bluetooth Low Energy (BLE for short), Zigbee and any other type of wireless transmission technology for transmission.

In a multi-connection application scenario, a device that maintains multiple connections may have scheduling conflicts among its links, which will reduce stability of the links; according to actual application requirements, a data pressure of each link may also be different, the device needs to allow a link with a higher transmission pressure to have more bandwidth according to the data pressures of different links, thereby improving a bandwidth utilization rate and overall performance of the application.

In the link processing method provided by the present application embodiments, the technology for optimizing arrangement of multi-connection anchor points is applied. The first device can rationally arrange anchor points of the respective links according to network requirements of the respective links after multiple connections are established, thereby planning bandwidth duty cycles of the links while avoiding scheduling conflicts among the links, and ultimately providing a user or a system with better network services and user experience.

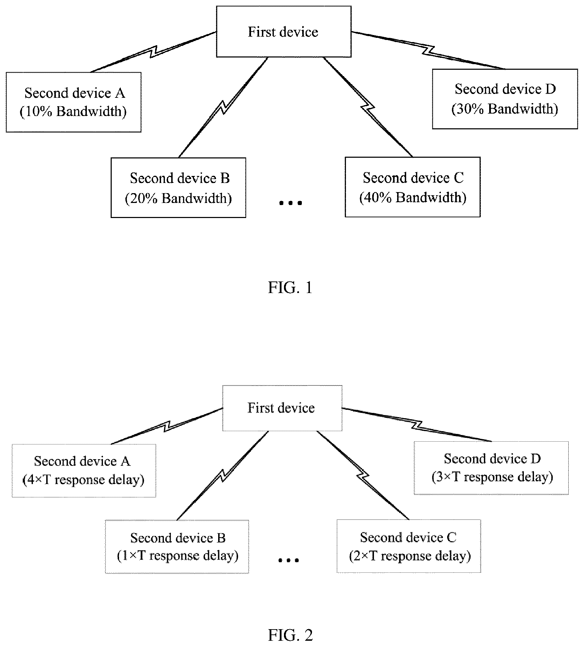

FIG. 1 is a schematic diagram of an application scenario of the present application. As shown in FIG. 1, in a network including a first device and two or more second devices, links between the first device and the second devices may be arranged evenly or proportionally within an Interval to reduce scheduling conflicts, thus allowing links with more bandwidth requirements to have more proportion of the communication bandwidth, and improving overall performance of the network. For example, planning bandwidth duty cycles of respective links so that a second device A occupies 10% of the bandwidth, a second device B occupies 20% of the bandwidth, a second device C occupies 40% of the bandwidth, and a second device D occupies 30% of the bandwidth, thereby avoiding scheduling conflicts among the links and improving stability of the links.

FIG. 2 is a schematic diagram of another application scenario of the present application, as shown in FIG. 2, the first device can configure response delays for respective second devices connected according to response speed requirements of devices. For example, planning response delays of the respective links, so that the second device A has a 4xT response delay, the second device B has a 1xT response delay, the second device C has a 2xT response delay, and the second device D has a 3xT response delay, thereby avoiding scheduling conflicts among the links and improving the stability of the links.

The technical solutions of the present application and how the technical solutions of the present application solve the above-mentioned technical problems will be described in detail herein with specific embodiments. The following specific embodiments can be combined with each other, and the same or similar concepts or processes may not be repeated in some embodiments. The embodiments of the present application will be described herein in conjunction with drawings.

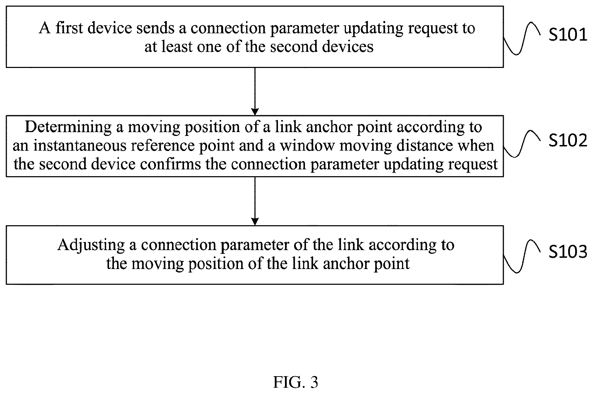

FIG. 3 is a flowchart of a link processing method provided by a first embodiment of the present application, as shown in FIG. 3, the method in this embodiment may be applied in a network including a first device and two or more second devices, and the first device is communicatively connected with the second devices via independent links like as in the invention. The method in this embodiment may include:
S101, a first device sends a connection parameter updating request to at least one of the second devices.

In this embodiment, the first device can achieve, based on BLE5.0 series standard protocols and through specific parameter configuration, specific process handling, and parameter application of the first device, connection layers where a conflict-free arrangement evenly or proportionally carried out on anchor points of the respective links by the first device. For example, the connection layer of the first device may send a connection parameter updating request (LL CONNECTION PARAM REQ PDU) to the second device.

It should be noted that this embodiment does not limit types of the first device and the second device in the topological structure. In the topological structure, the first device may be a primary device, the second device may be a secondary device, or the first device may be a secondary device, the second device may be a primary device, or the first device may be a multi-role device and the second device may be a primary device or secondary device.

S102, determining a moving position of a link anchor point according to an instantaneous reference point and a window moving distance when the second device confirms the connection parameter updating request.

In this embodiment, before determining the moving position of the link anchor point according to the instantaneous reference point and the window moving distance, further including: negotiating with the second device through a connection event of the link to determine the instantaneous reference point. For example, the first device and the second device negotiate according to CE configuration parameters to determine the instantaneous reference point (Instant).

Optionally, a sum of lengths of connection events on all the links is not greater than a minimum connection interval among the links.

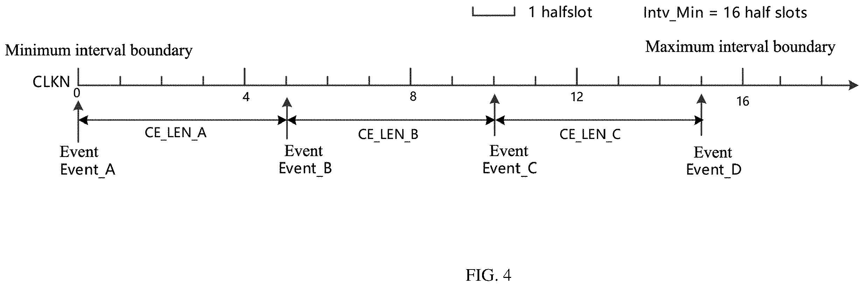

Specifically, the length of the connection event represents a space occupied by the connection event within a Connection Interval, which is abbreviated as CE_LEN because the full name is "The Length of Connection Event". The present application directly uses the BLE5.1 Standard Protocol to determine the CE_LEN of the first device, here two parameters (Minimum CE_ Length and Maximum_CE_Length) that exist when a connection parameter update is initiated in the BLE5.1 Specification Vol2.Part E 7.8.18 LE Connection Update command section may be both configured as CE_LEN to determine the CE_LEN parameter proposed by the present application. The first device, as a link manager, may configure different CE_LENs and Intervals in a multiple-relationship for the respective links according to bandwidth requirements and response speed requirements of the respective links, to make a link with a greater bandwidth requirement occupy more bandwidth, and to make a device with a higher response speed requirement have a smaller Interval. Assuming that the first device is taken as a primary device to establish connection events A, B, C, and D with multiple surrounding secondary devices in turn, the first device will make the connection relationships of the respective links (Connection Interval) be in a multiple relationship. Here, marking the smallest Connection Interval as Intv_Min, the Intervals of other events B, C, D are multiple of Intv_Min, the first device will offset the events relative to an offset of a reference point (denoted as Offset). FIG.4 is a schematic diagram of connection intervals of multiple links in an embodiment of the present application. As shown in FIG.4, in the process of arranging links by the first device, a timing relationship of the respective links is set by an algorithm as follows:
Step 1) Let Event_A_Offset = 0
Step 2) **Let** Event_B_Offset = Event_A_Offset + CE_LEN_A
Step 3) **Let** Event_C_Offset = Event_B_Offset + CE_LEN_B
Step 4) **Let** Event_D_Offset = Event_C_Offset + CE_LEN_C

In the invention, the above-mentioned process is implemented by the first device initiating a connection parameter update. Restriction conditions for the algorithm: a sum of CE_LENs of the multiple links cannot be greater than a minimum Interval, otherwise there will be insufficient bandwidth and link conflicts, which will not achieve optimization of link arrangement.

Optionally, where determining the moving position of the link anchor point according to the instantaneous reference point and the window moving distance includes: moving the link anchor point backward by one window moving distance by using the instantaneous reference point as a starting position.

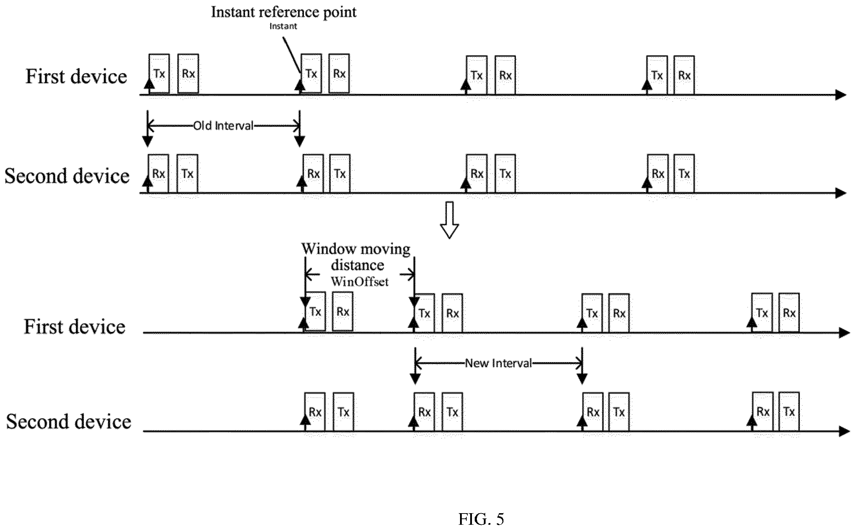

Specifically, FIG.5 is a schematic diagram of movement of an anchor point in multiple links in an embodiment of the present application, as shown in FIG.5, the first device and the second device calculate a reasonable window moving distance (WinOffset) through the negotiated instantaneous reference point (Instant). Then the first device and the second device move backward by a WinOffset distance at the same Instant position as agreed; among them, Old Interval represents an old connection interval, and New Interval represents a new connection interval. This embodiment can realize movement of an anchor point for a connection event, and subsequent scheduling is periodically performed according to the new Interval.

S103, adjusting a connection parameter of the link according to the moving position of the link anchor point.

In this embodiment and in the invention, the adjusting the connection parameter of the link according to the moving position of the link anchor point includes: adjusting a bandwidth duty cycle of the connection event and/or a connection interval of the link by starting from the moving position of the link anchor point.

Optionally, the adjusting the connection interval of the link includes: adjusting connection intervals of the respective links according to response speed requirements of the respective links, where the connection intervals of the respective links are equal or in a multiple relationship.

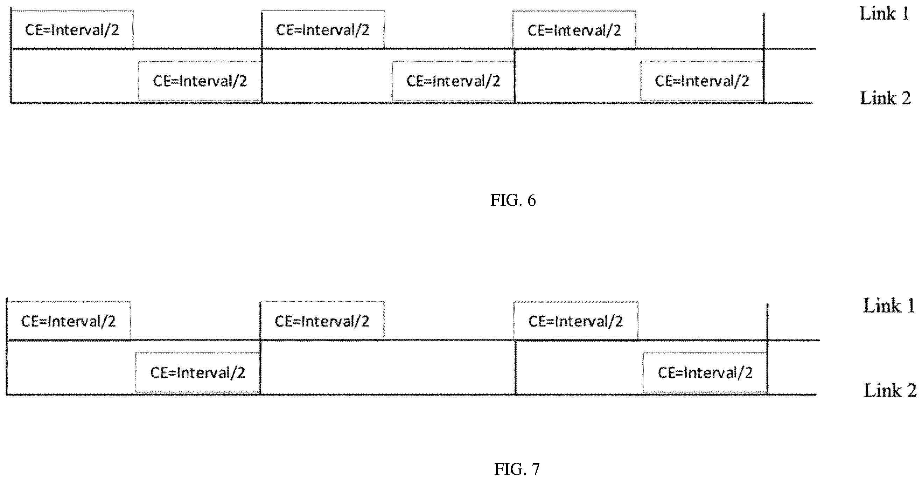

Specifically, through the connection parameter update, a connection interval for a first link may be configured as CE=Interval/2 and a connection interval for a second link may be configured as CE=Interval/2, thus realizing a uniform arrangement shown in FIG. 6. In this case, Link 1 occupies 1/2 of the bandwidth, and Link 2 occupies 1/2 of the bandwidth. Also, through the connection parameter update, the connection interval for the first link may be configured as Interval=CI and the bandwidth duty cycle of the connection event for the first link may be configured as CE=CI/2; the connection interval for the second link may be configured as Interval=2*CI and the bandwidth duty cycle of the connection event for the second link may be configured as CE=CI/2, thus realizing a multiple relationship arrangement shown in FIG. 7. In this case, Link 1 will have a faster response speed, and may alternately occupy all the bandwidth.

Optionally, the adjusting the bandwidth duty cycle of the connection event of the link includes: adjusting bandwidth duty cycles of connection events of the respective links according to bandwidth requirements of the respective links, where lengths of the connection events of the respective links are equal or in a multiple relationship.

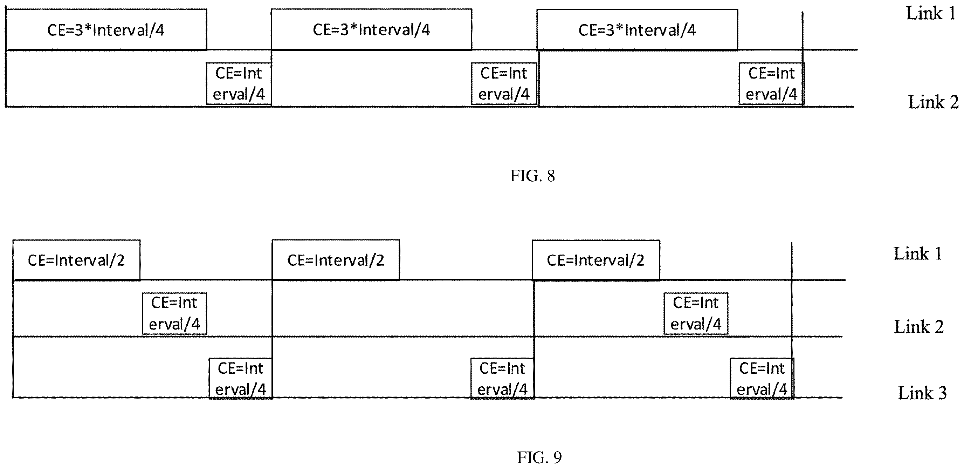

Specifically, through the connection parameter update, the connection interval may be configured as Interval=CI for the first link and the bandwidth duty cycle of the connection event for the first link may be configured as CE=3*CI/4, the connection interval for the second link may be configured as Interval=CI and the bandwidth duty cycle of the connection event for the second link may be configured as CE=1*CI/4, thus realizing a proportional relationship arrangement shown in FIG. 8. In this case, Link 1 occupies 3/4 of the bandwidth, and Link 2 occupies 1/4 of the bandwidth. Also, through the connection parameter update, the connection interval for the first link may be configured as Interval=CI, the bandwidth duty cycle of the connection event for the first link may be configured as CE=CI/2; the connection interval for the second link may be configured as Interval=2*CI, the bandwidth duty cycle of the connection event for the second link may be configured as CE=CI/4; the connection interval for the third link may be configured as Interval=CI, the bandwidth duty cycle of the connection event for the third link may be configured as CE=CI/4, thus realizing a multiple relationship arrangement shown in FIG. 9. In this case, Link 1 and Link 3 will have a faster response speed, and Link 1 may occupy a bandwidth ranging from 1/2 of the Interval to 3/4 of the Interval, and Link 3 always occupies 1/4 of the Interval.

In this embodiment, a connection parameter updating request is sent to at least one of second devices by a first device; a moving position of a link anchor point is determined according to an instantaneous reference point and a window moving distance when the second device confirms the connection parameter updating request; a connection parameter of the link is adjusted according to the moving position of the link anchor point, thereby realizing a reasonable arrangement of the scheduling of multiple links, avoiding scheduling conflicts among the links, improving stability of the links, as well as optimizing bandwidth duty cycle of the links, and improving utilization of bandwidth resources.

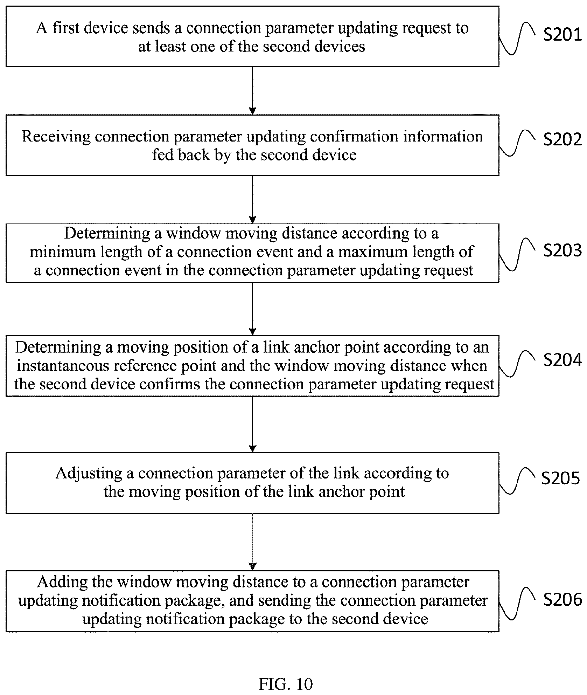

FIG. 10 is a flowchart of a link processing method provided by a second embodiment of the present application and corresponding to the invention. In this embodiment, the first device is a primary device, the second device is a secondary device, the method in this embodiment may include:
S201, the first device sends a connection parameter updating request to at least one of the second devices.

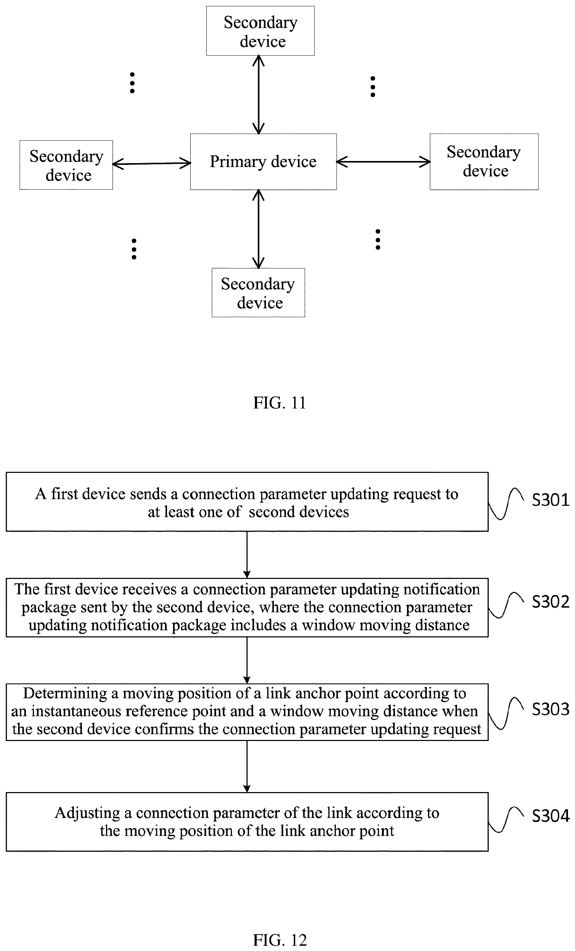

In this embodiment, the first device is the primary device, and the second device is the secondary device. FIG. 11 is a schematic diagram of a network topological structure provided in the second embodiment of the present application. As shown in FIG. 11, a primary device initiates establishment of a connection with any one of multiple secondary devices for exchanging application data. The first device, as a primary device end of the link, is responsible for establishing the link, and both parties may update a link parameter and exchange application data. In the process of implementation, the primary device sends a connection parameter updating request to the secondary device, reference may be made to S101 for specific description, which will not be repeated here.

S202, receiving connection parameter updating confirmation information fed back by the second device.

If the secondary device agrees with the request and responds with the connection parameter updating confirmation information (LL_CONNECTION_PARAM_RSP PDU). The primary device receives the confirmation information fed back by the secondary device.

S203, determining a window moving distance according to a minimum length of a connection event and a maximum length of a connection event in the connection parameter updating request.

The primary device calculates and determines the window moving distance (WinOffset) based on a CE_LEN decided by the Minimum_CE_Length and Maximum_CE_Length in the connection update parameters. For example, the BLE5.1 Standard Protocol may be used to determine the CE_LEN of the first device, here, the two parameters (Minimum_CE_Length and Maximum_CE_Length) that exist when the connection parameter update is initiated (refer to BLE5.1 Specification Vol2.Part E 7.8.18 LE Connection Update command section) may both be configured as CE_LEN, thereby determining the CE_LEN parameter proposed by the present application.

S204, determining a moving position of a link anchor point according to an instantaneous reference point and the window moving distance when the second device confirms the connection parameter updating request.

S205, adjusting a connection parameter of the link according to the moving position of the link anchor point.

For the specific implementation process and technical principles of step S204 and step S205, reference may be made to relevant descriptions of step S102 and step S103 in the method shown in FIG. 3, which will not be repeated here.

S206, adding the window moving distance to a connection parameter updating notification package, and sending the connection parameter updating notification package to the second device.

The window moving distance is a added to a connection parameter updating notification package, and the connection parameter updating notification package is sent to the second device, so that the second device adjusts the connection parameter of the link.

It should be noted that when the first device is the primary device in this embodiment, as a final window moving distance (Winoffset) is determined by the primary device, that is, this link anchor point adjustment technology applied to the primary device is generally compatible with other BLE5.0 devices.

In this embodiment, a connection parameter updating request is sent to at least one of second devices by a first device; a moving position of a link anchor point is determined according to an instantaneous reference point and a window moving distance when the second device confirms the connection parameter updating request; a connection parameter of the link is adjusted according to the moving position of the link anchor point, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

In addition, in this embodiment, the first device serves as the primary device, and the second device serves as the secondary device. Connection parameter updating confirmation information fed back by the second device can also be received; a window moving distance can be determined according to a minimum length of a connection event and a maximum length of a connection event in the connection parameter updating request; the window moving distance can be added to a connection parameter updating notification package, and the connection parameter updating notification package can be sent to the second device, thereby realizing a reasonable arrangement of scheduling of multiple links, avoiding scheduling conflicts among the links, improving stability of the links, as well as optimizing bandwidth duty cycle of respective links, and improving utilization of bandwidth resources.

FIG. 12 is a flowchart of a link processing method provided by a third embodiment of the present application, as shown in FIG. 12, in this embodiment, a first device is a secondary device, a second device is a primary device, the method in this embodiment may include:
S301, the first device sends a connection parameter updating request to at least one of the second devices;

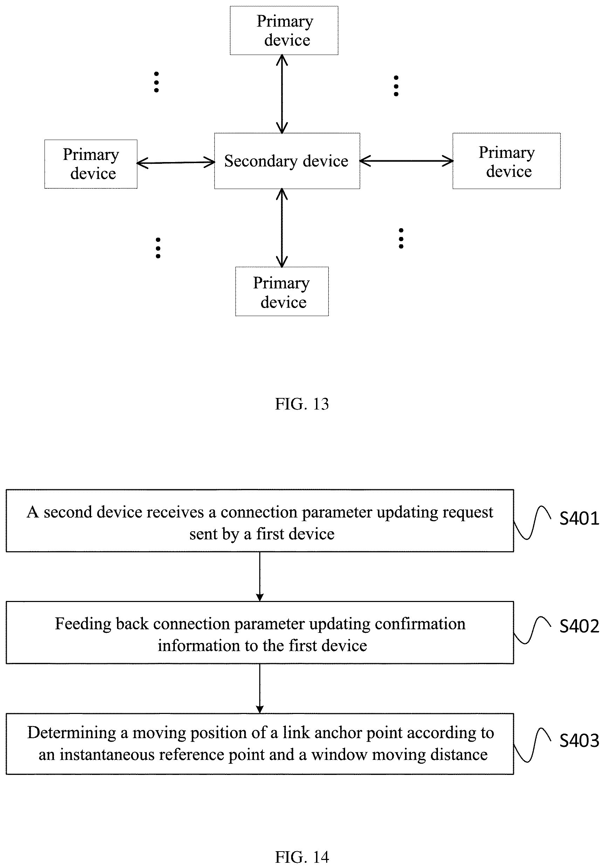

In this embodiment, the first device is the secondary device, and the second device is the primary device, FIG. 13 is a schematic diagram of a network topological structure provided by the third embodiment of the present application. As shown in FIG. 13, surrounding primary devices initiate establishment of connections with the secondary device, the surrounding primary devices are responsible for establishing the links, and both parties may update link parameters and exchange application data. In the process of implementation, the primary device sends a connection parameter updating request to the secondary device, for specific description, reference may be made to S 101, which will not be repeated here.

S302, the first device receives a connection parameter updating notification package sent by the second device, where the connection parameter updating notification package includes a window moving distance.

In this embodiment, the window moving distance is determined by the primary device, and then the secondary device receives the connection parameter updating notification package containing the window moving distance sent by the primary device.

S303, determining a moving position of a link anchor point according to an instantaneous reference point and the window moving distance when the second device confirms the connection parameter updating request.

S304, adjusting a connection parameter of the link according to the moving position of the link anchor point.

In this embodiment, for the specific implementation process and technical principles of step S303 and step S304, reference may be made to relevant descriptions of step S102 and step S103 in the method shown in FIG. 3, which will not be repeated here.

In this embodiment, a connection parameter updating request is sent to at least one of second devices through a first device; a moving position of a link anchor point is determined according to an instantaneous reference point and a window moving distance when the second device confirms the connection parameter updating request; a connection parameter of the link is adjusted according to the moving position of the link anchor point, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

In addition, in this embodiment, the first device serves as the secondary device, and the second device serves as the primary device. The first device may also receive a connection parameter updating notification package sent by the second device after the second device confirms the connection parameter updating request, the connection parameter updating notification package containing the window moving distance, thereby realizing a reasonable arrangement of scheduling of multiple links, avoiding scheduling conflicts among the links, improving stability of the links, as well as optimizing bandwidth duty cycles of respective links, and improving utilization of bandwidth resources.

FIG. 14 is a flowchart of a link processing method provided by a fourth embodiment of the present application, as shown in FIG. 14, the method in this embodiment may be applied in a network including a first device and two or more second devices, and the first device is communicatively connected with the second device via independent links; the method in this embodiment may include:
S401, the second device receives a connection parameter updating request sent by the first device;
S402, feeding back connection parameter updating confirmation information to the first device; and
S403, determine a moving position of a link anchor point according to an instantaneous reference point and a window moving distance.

In this embodiment, before determining the moving position of the link anchor point according to the instantaneous reference point and the window moving distance, further including: negotiating with the first device through a connection event of the link to determine the instantaneous reference point.

Optionally, a sum of lengths of connection events on all the links is not greater than a minimum connection interval among the links.

Optionally, the determining the moving position of the link anchor point according to the instantaneous reference point and the window moving distance includes: moving the link anchor point backward by one window moving distance by using the instantaneous reference point as a starting position.

In this embodiment, a connection parameter updating request sent by a first device is received by a second device; connection parameter updating confirmation information is fed back to the first device; and a moving position of a link anchor point is determined according to an instantaneous reference point and a window moving distance, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

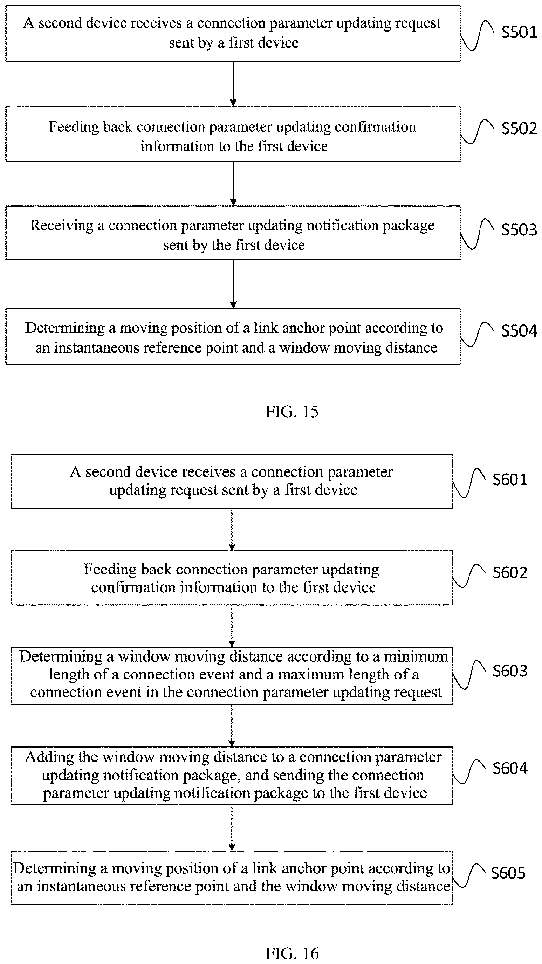

FIG. 15 is a flowchart of a link processing method provided by a fifth embodiment of the present application and the invention, as shown in FIG. 15, in this embodiment, a first device is a primary device, a second device is a secondary device, the method in this embodiment may include:
S501, the second device receives a connection parameter updating request sent by the first device;
5502, feeding back connection parameter updating confirmation information to the first device; and
S503, receiving a connection parameter updating notification package sent by the first device.

In this embodiment, a window moving distance is determined by the primary device, and then the secondary device receives the connection parameter updating notification package containing the window moving distance sent by the primary device.

S504, determining a moving position of a link anchor point according to an instantaneous reference point and the window moving distance.

In this embodiment, for the specific implementation process and technical principles of step S501, step S503 and step S504, reference may be made to relevant descriptions from step S401 to step S403 in the method shown in FIG. 14, which will not be repeated here.

In this embodiment, a connection parameter updating request sent by a first device is received by a second device; connection parameter updating confirmation information is fed back to the first device; and a moving position of a link anchor point is determined according to an instantaneous reference point and a window moving distance, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

In addition, in this embodiment, the first device serves as the primary device, and the second device serves as the secondary device. The connection parameter updating notification package sent by the first device may also be received, the connection parameter updating notification package containing the window moving distance, thereby realizing a reasonable arrangement of scheduling of multiple links, avoiding scheduling conflicts among the links, improving stability of the links, as well as optimizing bandwidth duty cycles of respective links, and improving utilization of bandwidth resources.

FIG. 16 is a flowchart of a link processing method provided by a sixth embodiment of the present application, as shown in FIG. 16, in this embodiment, when a first device is a secondary device, and a second device is a primary device, the method in this embodiment may include:
S601, the second device receives a connection parameter updating request sent by the first device;
S602, feeding back connection parameter updating confirmation information to the first device;
S603, determining a window moving distance according to a minimum length of a connection event and a maximum length of a connection event in the connection parameter updating request.

In this embodiment, the primary device calculates and determines the window moving distance (WinOffset) according to the CE_LEN decided by Minimum_CE_Length and Maximum_CE_Length in the connection update parameters. For example, the BLE5.1 standard protocol may be used to determine the CE_LEN of the first device, here, the two parameters (Minimum_CE_Length and Maximum_CE_Length) that exist when the connection parameter update is initiated (refer to BLE5.1 Specification Vol2.PartE 7.8.18 LE Connection Update command section) may both be configured as CE_LEN, thereby determining the CE_LEN parameter proposed by the present application.

S604, adding the window moving distance to a connection parameter updating notification package, and sending the connection parameter updating notification package to the first device.

S605, determining a moving position of a link anchor point according to an instantaneous reference point and the window moving distance.

In this embodiment, for the specific implementation process and technical principles of step S601, step S602 and step S605, reference may be made to relevant descriptions from step S401 to step S403 in the method shown in FIG. 14, which will not be repeated here.

In this embodiment, a connection parameter updating request sent by a first device is received by a second device; connection parameter updating confirmation information is fed back to the first device; and a moving position of a link anchor point is determined according to an instantaneous reference point and the window moving distance, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

In addition, in this embodiment, the first device serves as the secondary device, and the second device serves as the primary device. The window moving distance can also be determined according to a minimum length of the connection event and a maximum length of the connection event in the connection parameter updating request; add the window moving distance to the connection parameter updating notification package, and the connection parameter updating notification package can be sent to the first device, thereby realizing a reasonable arrangement of scheduling of multiple links, avoiding scheduling conflicts among the links, improving stability of the links, as well as optimizing bandwidth duty cycles of respective links, and improving utilization of bandwidth resources.

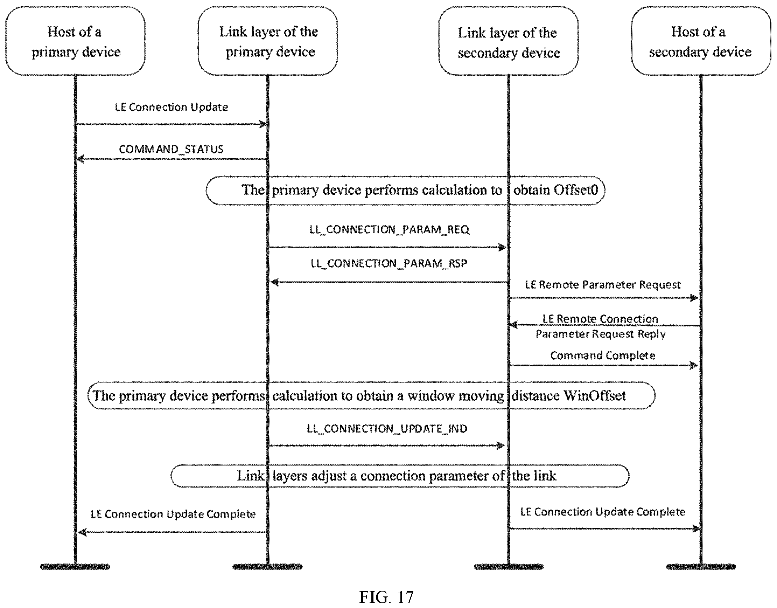

FIG. 17 is a flow sequence diagram of a link processing method provided by a seventh embodiment of the present application, as shown in FIG. 17, when a first device is a primary device and a second device is a secondary device, a link layer of the primary device receives a connection parameter updating command LE Connection Update sent by a Host of the primary device. The link layer of the primary device replies to the Host of the primary device through a Command Status event, and determines Offset0, which is used for movement of an anchor point, according to CE_LEN decided by Minimum_CE_Length and Maximum_CE_Length in connection update parameters. Then, the link layer of the primary device sends a connection parameter updating request LL_CONNECTION_PARAM_REQ PDU to a link layer of the secondary device. If the secondary device agrees with the request, it sends a connection parameter reply message LL_CONNECTION_PARAM_RSP to the link layer of the primary device. After the primary device receives the connection parameter reply message, it converts Offset0 into a window moving distance WinOffset, and then fills the WinOffset in a connection parameter updating notification LL_CONNECTION_UPDATE_IND, and sends the connection parameter updating notification to the link layer of the secondary device. Then, the Host of the primary device and a Host of the secondary device realize the movement of the anchor point according to the configuration of the WinOffset and the instant reference point Instant. Finally, both parties report a connection parameter updating complete event LE Connection Update Complete Event through HCIs (Host Controller Interface, Host Controller Interface).

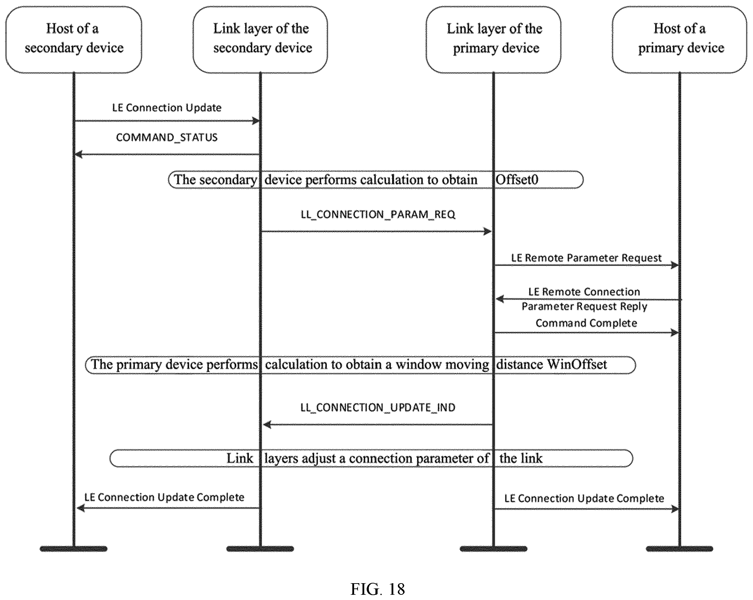

FIG. 18 is a flow sequence diagram of a link processing method provided by an eighth embodiment of the present application, as shown in FIG. 18, when a first device serves as a secondary device and a second device serves as a primary device, a link layer of the secondary device receives a connection parameter updating command LE Connection Update of a Host of the secondary device. The link layer of the secondary device replies to the Host of the secondary device through a Command Status event, and determines Offset0, which is used for movement of an anchor point, according to CE_LEN decided by Minimum_CE_Length and Maximum_CE_Length in connection update parameters. Then, the link layer of the secondary device sends a connection parameter updating request LL_CONNECTION_PARAM_REQ PDU to the link layer of the primary device. If the link layer of the primary device replies a connection parameter reply message, the Host of the primary device converts the originally calculated Offset0 into a window moving distance WinOffset, then fills the WinOffset in a connection parameter updating notification LL_CONNECTION_UPDATE_IND, and sends the connection parameter updating notification to the link layer of the secondary device. Then, the Host of the primary device and the Host of the secondary device realize the movement of the anchor point according to the configuration of WinOffset and the instant reference point Instant. Finally, both parties report a connection parameter updating complete event LE Connection Update Complete Event through HCIs (Host Controller Interface).

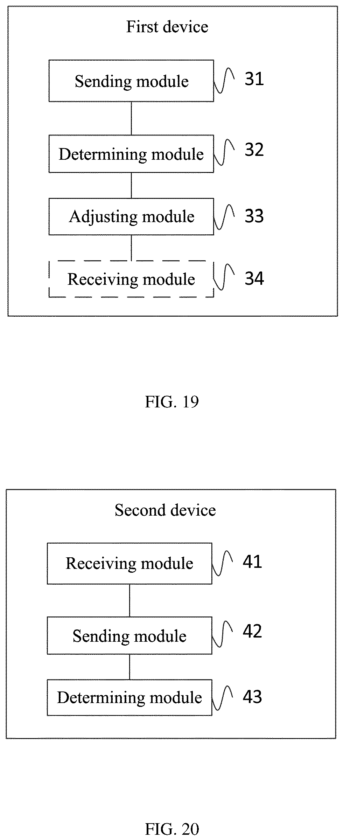

FIG. 19 is a schematic structural diagram of a first device provided by a ninth embodiment of the present application, as shown in FIG. 19, a first device of this embodiment may be communicatively connected with two or more second devices via independent links and includes:
a sending module 31, configured to send a connection parameter updating request to at least one of the second devices;
a determining module 32, configured to determine a moving position of a link anchor point according to an instantaneous reference point and a window moving distance when the second device confirms the connection parameter updating request; and
an adjusting module 33, configured to adjust a connection parameter of the link according to the moving position of the link anchor point.

Optionally, when the first device is a primary device and the second device is a secondary device; the first device further includes:
a receiving module 34, configured to receive connection parameter updating confirmation information fed back by the second device;
the determining module 32 is further configured to determine the window moving distance according to a minimum length of a connection event and a maximum length of a connection event in the connection parameter updating request;
the sending module 31 is further configured to add the window moving distance to a connection parameter updating notification package, and send the connection parameter updating notification package to the second device.

Optionally, when the first device is the secondary device and the second device is the primary device, the first device further includes:
a receiving module 34, configured to receive, after the second device confirms the connection parameter updating request, a connection parameter updating notification package sent by the second device, where the connection parameter updating notification package includes the window moving distance.

Optionally, the determining module 32 is further configured to:
negotiate with the second device through a connection event of the link to determine the instantaneous reference point.

Optionally, a sum of lengths of connection events on all the links is not greater than a minimum connection interval among the link.

Optionally, the determining module 32 is specifically configured to:
move the link anchor point backward by one window moving distance by using the instantaneous reference point as a starting position.

Optionally, the adjusting module 33 is specifically configured to:
adjust a bandwidth duty cycle of a connection event and/or a connection interval of the link by starting from the moving position of the link anchor point.

Optionally, the determining module 33 is also configured to:
adjust connection intervals of the links according to response speed requirements of the links, where the connection intervals of the link are equal or in a multiple relationship.

Optionally, the determining module 33 is also configured to:
adjust bandwidth duty cycles of connection events of the links according to a bandwidth requirement of the links, where lengths of the connection events of the links are equal or in a multiple relationship.

The first device of this embodiment may execute technical solutions in the methods shown in FIG. 3, FIG. 10, and FIG. 12, for the specific implementation process and technical principles, reference may be made to the related descriptions in the methods shown in FIG. 3, FIG. 10, and FIG. 12, which will not be repeated here.

In this embodiment, a connection parameter updating request is sent to at least one of second devices by a first device; when the second device confirms the connection parameter updating request, a moving position of a link anchor point is determined according to an instantaneous reference point and a window moving distance; and a connection parameter of the link is adjusted according to the moving position of the link anchor point, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

FIG. 20 is a schematic structural diagram of a second device provided by a tenth embodiment of the present application, as shown in FIG. 20, the second device of this embodiment includes:
a receiving module 41, configured to receive a connection parameter updating request sent by the first device;
a sending module 42, configured to feed back connection parameter updating confirmation information to the first device;
a determining module 43, configured to determine a moving position of a link anchor point according to an instantaneous reference point and a window moving distance.

Optionally, when the first device is a primary device and the second device is a secondary device; the receiving module 41 is further configured to:
receive a connection parameter updating notification package sent by the first device, where the connection parameter updating notification package includes the window moving distance.

Optionally, when the first device is the secondary device and the second device is the primary device,
the determining module 43 is further configured to determine the window moving distance according to a minimum length of a connection event and a maximum length of a connection event in the connection parameter updating request;
the sending module 42 is further configured to add the window moving distance to a connection parameter updating notification package, and send the connection parameter updating notification package to the first device.

Optionally, the determining module 43 is further configured to:
negotiate with the first device through a connection event of the link to determine the instantaneous reference point.

Optionally, a sum of lengths of connection events on all the links is not greater than a minimum connection interval among the link.

Optionally, the determining module 43 is specifically configured to:
move the link anchor point backward by one window moving distance by using the instantaneous reference point as a starting position.

The second device of this embodiment may execute technical solutions in the methods shown in FIG. 14, FIG. 15, and FIG. 16, for the specific implementation process and technical principles, reference may be made to the related descriptions in the methods shown in FIG. 14, FIG. 15, and FIG. 16, which will not be repeated here.

In this embodiment, a connection parameter updating request sent by a first device is received by a second device; a connection parameter updating confirmation information is fed back to the first device; a moving position of a link anchor point is determined according to an instantaneous reference point and a window moving distance, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

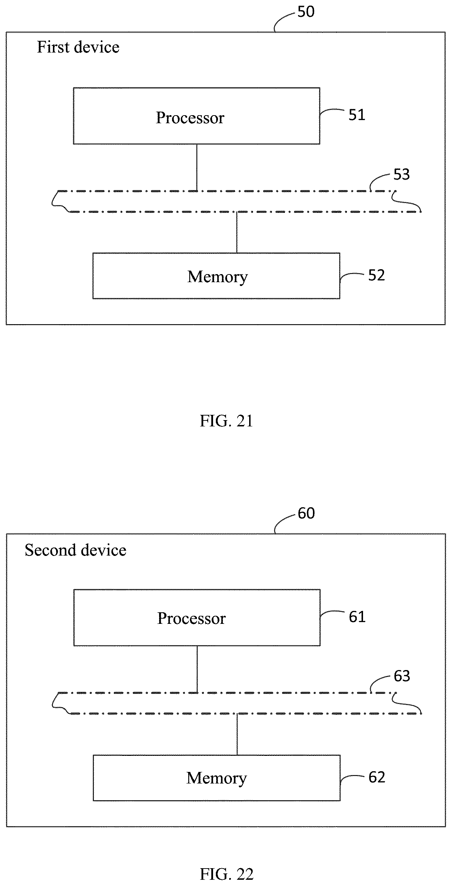

FIG. 21 is a schematic structural diagram of a first device provided by an eleventh embodiment of the present application, as shown in FIG. 21, the first device 50 of this embodiment may include: a processor 51 and a memory 52.

The memory 52 is configured to store programs; the memory 52 may include a volatile memory, such as a random-access memory (Abbreviation: RAM), for example a static random-access memory (Abbreviation: SRAM), a double data rate synchronous dynamic random access memory (Abbreviation: DDR SDRAM), etc.; the memory may also include a non-volatile memory, such as a flash memory. The memory 52 is configured to store computer programs (such as application programs and functional modules that implement the above-mentioned methods), computer instructions, etc., and the above-mentioned computer programs, computer instructions, etc. may be partitioned and stored in one or more memories 52. Also, the above-mentioned computer programs, computer instructions, data, etc. may be called by the processor 51.

The processor 51 is configured to execute the computer programs stored in the memory 52 to implement each step in the methods involved in the above-mentioned embodiments.

For details, reference may be made to related descriptions in the above-mentioned method embodiments.

The processor 51 and the memory 52 may be of independent structures, or may be integrated together in an integrated structure. When the processor 51 and the memory 52 are of independent structures, the memory 52 and the processor 51 may be coupled and connected through a bus 53.

The first device of this embodiment may execute the technical solutions in the methods shown in FIG. 3, FIG. 10, and FIG. 12, for the specific implementation process and technical principles, reference may be made to the related descriptions in the methods shown in FIG. 3, FIG. 10, and FIG. 12, which will not be repeated here.

In this embodiment, a connection parameter updating request is sent to at least one of second devices by a first device; a moving position of a link anchor point is determined according to an instantaneous reference point and a window moving distance when the second device confirms a connection parameter updating request; and a connection parameter of the link is adjusted according to the moving position of the link anchor point, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

FIG. 22 is a schematic structural diagram of a second device provided by a twelfth embodiment of the present application, as shown in FIG. 22, the second device 60 of this embodiment may include: a processor 61 and a memory 62.

The memory 62 is configured to store programs; the memory 62 may include a volatile memory, such as a random-access memory (Abbreviation: RAM), for example a static random-access memory (Abbreviation: SRAM), a double data rate synchronous dynamic random access memory (Abbreviation: DDR SDRAM), etc.; the memory may also include a non-volatile memory, such as a flash memory. The memory 62 is configured to store computer programs (such as application programs and functional modules that implement the above-mentioned methods), computer instructions, etc., and the above-mentioned computer programs, computer instructions, etc. may be partitioned and stored in one or more memories 62. Also, the above-mentioned computer programs, computer instructions, data, etc. may be called by the processor 61.

The processor 61 is configured to execute the computer programs stored in the memory 62 to implement each step in the methods involved in the above-mentioned embodiments.

For details, reference may be made to related descriptions in the above-mentioned method embodiments.

The processor 61 and the memory 62 may be of independent structures, or may be integrated together in an integrated structure. When the processor 61 and the memory 62 are of independent structures, the memory 62 and the processor 61 may be coupled and connected through a bus 63.

The second device of this embodiment may execute the technical solutions in the methods shown in FIG. 14, FIG. 15, and FIG. 16, for the specific implementation process and technical principles, reference may be made to the related descriptions in the methods shown in FIG. 14, FIG. 15, and FIG. 16, and will not be repeated here.

In this embodiment, a connection parameter updating request sent by a first device is received by a second device; a connection parameter updating confirmation information is fed back to the first device; and a moving position of a link anchor point is determined according to an instantaneous reference point and a window moving distance, thereby realizing a reasonable arrangement of the scheduling of multiple links, avoiding scheduling conflicts among the links, improving stability of the links, as well as optimizing bandwidth duty cycles of respective links, and improving utilization of bandwidth resources.

In addition, the embodiments of the present application also provide a computer-readable storage medium. The computer-readable storage medium stores computer-executable instructions. When at least one processor of the user equipment executes the computer-executable instructions, the user equipment executes various possible methods mentioned above.

Among them, the computer-readable medium includes a computer storage medium and a communication medium, where the communication medium includes any medium that facilitates the transfer of computer programs from one place to another. The storage medium may be any available medium that may be accessed by a generic-purpose or specific-purpose computer. An exemplary storage medium is coupled to a processor, so that the processor may read information from the storage medium and write information to the storage medium. Of course, the storage medium may also be an integral part of the processor. The processor and the storage medium may be located in an application-specific integrated circuit (ASIC). In addition, the application-specific integrated circuit may be located in the user equipment. Of course, the processor and the storage medium may also exist as discrete components in a communication device.

Those skilled in the art may understand that: all or part of the steps in the embodiments of the foregoing method may be implemented by a program instructing relevant hardware. The above-mentioned program may be stored in a computer-readable storage medium. When the program is executed, steps including the embodiments of the foregoing methods are executed; and the foregoing storage medium includes: a read-only memory (ROM), a random access memory (RAM), a magnetic disks or an optical disk, etc., which can store program codes.

Those skilled in the art will easily think of other embodiments of the present disclosure after considering the specification and practicing the present application disclosed herein. The present application is intended to cover any modification, use, or adaptive change of the present disclosure. These modifications, uses, or adaptive changes follow the general principles of the present disclosure and include common knowledge or commonly used technical means in the technical field that is not disclosed in the present disclosure. The description and embodiments are only regarded as exemplary, and the true scope and spirit of the present disclosure are pointed out by the following claims.

It should be understood that the present disclosure is not limited to the precise structure described above and shown in the figures, and various modifications and changes may be made without departing from its scope. The scope of the present disclosure is only limited by the appended claims.

## Claims

1. A link processing method applied in a network comprising a first device and two or more second devices, the first device being communicatively connected with each of the second devices via independent wireless links, wherein there is one link between the first device and each of the second device; the method comprising:
sending (S201), by the first device, a connection parameter updating request to at least one of the second devices;
receiving (S202), by the first device, connection parameter updating confirmation information fed back by the second device in response to the connection parameter updating request; the method is **characterized by**
determining (S204), according to a time-domain instantaneous reference point and a window moving distance, a time-domain moving position of a link anchor point when the second device confirms the connection parameter updating request;
adjusting (S205) a connection parameter of the link according to the moving position of the link anchor point, wherein the adjusting comprises:
adjusting a bandwidth duty cycle of a connection event and/or a connection interval of the link by starting from the moving position of the link anchor point, so that a sum of lengths of connection events on all the links is not greater than a minimum connection interval among the links;
adding (S206) the window moving distance to a connection parameter updating notification package, and sending the connection parameter updating notification package to the second device.

2. The method according to claim 1, wherein when the first device is a primary device and the second device is a secondary device, the method further comprises:
determining (S203) the window moving distance according to a minimum length of a connection event and a maximum length of a connection event comprised in the connection parameter updating request.

3. The method according to claim 1, wherein before determining (S204), according to the time-domain instantaneous reference point and the window moving distance, the time-domain moving position of the link anchor point, the method further comprises:
negotiating with the second device through a connection event of the link to determine the instantaneous reference point.

4. The method according to claim 3, wherein determining (S204), according to the time-domain instantaneous reference point and the window moving distance, the time-domain moving position of the link anchor point comprises:
moving the link anchor point backward by one window moving distance by using the instantaneous reference point as a starting position.

5. The method according to claim 1, wherein adjusting (S205) the connection interval of the link comprises:
adjusting connection intervals of the links according to response speed requirements of the links, wherein the connection intervals of the links are equal or in a multiple relationship.

6. The method according to claim 1, wherein adjusting (S205) the bandwidth duty cycle of the connection event of the link comprises:
adjusting bandwidth duty cycles of connection events of the links according to bandwidth requirements of the links, wherein lengths of the connection events of the links are equal or in a multiple relationship.

7. A link processing method applied in a network comprising a first device and two or more second devices, the first device being communicatively connected with each of the second devices via independent wireless links, wherein there is one link between the first device and each of the second device; the method comprising:
receiving (S501), by the second device, a connection parameter updating request sent by the first device;
feeding back (S502), by the second device, connection parameter updating confirmation information to the first device; the method is **characterized by** receiving (S503) a connection parameter updating notification package sent by the first device, wherein the connection parameter updating notification package comprises the window moving distance;
determining (S504), according to a time-domain instantaneous reference point and the window moving distance, a time-domain moving position of a link anchor point;
adjusting a connection parameter of the link according to the moving position of the link anchor point, wherein the adjusting comprises:
adjusting a bandwidth duty cycle of a connection event and/or a connection interval of the link by starting from the moving position of the link anchor point, so that a sum of lengths of connection events on all the links is not greater than a minimum connection interval among the links.

8. The method according to claim 7, wherein the first device is a primary device and the second device is a secondary device.

9. The method according to claim 7, wherein before determining (S504), according to the time-domain instantaneous reference point and the window moving distance, the time-domain moving position of the link anchor point, the method further comprises:
negotiating with the first device through a connection event of the link to determine the instantaneous reference point.

10. The method according to claim 9, wherein determining (S504), according to the time-domain instantaneous reference point and the window moving distance, the time-domain moving position of the link anchor point comprises:
moving the link anchor point backward by one window moving distance by using the instantaneous reference point as a starting position.

## Patentansprüche

1. Verbindungs-Verarbeitungsverfahren, das in einem Netzwerk angewendet wird, das eine erste Vorrichtung und zwei oder mehr zweite Vorrichtungen umfasst, wobei die erste Vorrichtung mit jeder der zweiten Vorrichtungen über unabhängige drahtlose Verbindungen kommunikativ verbunden ist, wobei es eine Verbindung zwischen der ersten Vorrichtung und jeder der zweiten Vorrichtungen gibt; das Verfahren Folgendes umfassend:
Senden (S201), über die erste Vorrichtung, einer Anforderung zur Aktualisierung der Verbindungsparameter an mindestens eine der zweiten Vorrichtungen;
Empfangen (S202), durch die erste Vorrichtung, von Aktualisierungs-Bestätigungsinformationen zu dem Verbindungsparameter, der von der zweiten Vorrichtung als Reaktion auf die Verbindungsparameter-Aktualisierungsanforderung zurückgesendet wird, wobei das Verfahren durch gekennzeichnet ist;
Bestimmen (S204), gemäß einem momentanen Zeitbereichs-Bezugspunkt und einer Fenster-Bewegungsdistanz, einer Zeitbereichs-Bewegungsposition eines Ankerlinks, wenn die zweite Vorrichtung die Verbindungsparameter-Aktualisierungsanforderung bestätigt;
Einstellen (S205) eines Verbindungsparameters der Verbindung entsprechend der Bewegungsposition des Ankerlinks, wobei das Einstellen Folgendes umfasst:
Einstellen eines Bandbreiten-Auslastungsgrads eines Verbindungsereignisses und/oder eines Verbindungsintervalls der Verbindung, ausgehend von der Bewegungsposition des Ankerlinks, so dass eine Summe der Längen von Verbindungsereignissen an allen Verbindungen nicht größer ist als ein minimales Verbindungsintervall zwischen den Verbindungen;
Hinzufügen (S206) der Fenster-Bewegungsdistanz zu einem Verbindungsparameter-Aktualisierungsbenachrichtigungspaket und Senden des Verbindungsparameter-Aktualisierungsbenachrichtigungspakets an die zweite Vorrichtung.

2. Verfahren nach Anspruch 1, wobei, wenn die erste Vorrichtung eine primäre Vorrichtung und die zweite Vorrichtung eine sekundäre Vorrichtung ist, das Verfahren ferner Folgendes umfasst:
Bestimmen (S203) der Fenster-Bewegungsdistanz gemäß einer minimalen Länge eines Verbindungsereignisses und einer maximalen Länge eines Verbindungsereignisses, die in der Aktualisierungsanforderung der Verbindungsparameter enthalten sind.

3. Verfahren nach Anspruch 1, wobei das Verfahren vor dem Bestimmen (S204) der Zeitbereich-Bewegungsposition des Ankerlinks gemäß dem momentanen Zeitbereich-Bezugspunkt und der Fenster-Bewegungsdistanz ferner Folgendes umfasst:
Verhandeln mit der zweiten Vorrichtung über ein Verbindungsereignis der Verbindung, um den momentanen Referenzpunkt zu bestimmen.

4. Verfahren nach Anspruch 3, wobei das Bestimmen (S204) der Zeitbereich-Bewegungsposition des Ankerlinks gemäß dem momentanen Zeitbereich-Bezugspunkt und der Fenster-Bewegungsdistanz Folgendes umfasst:
Verschieben des Ankerlinks um eine Fenster-Verschiebungsdistanz nach hinten, wobei der momentane Referenzpunkt als Startposition verwendet wird.

5. Verfahren nach Anspruch 1, wobei das Anpassen (S205) des Verbindungsintervalls der Verbindung Folgendes umfasst:
Anpassen der Verbindungsintervalle der Verbindungen entsprechend den Anforderungen an die Reaktionsgeschwindigkeit der Verbindungen, wobei die Verbindungsintervalle der Verbindungen gleich sind oder ein Mehrfachverhältnis aufweisen.

6. Verfahren nach Anspruch 1, wobei das Anpassen (S205) des Bandbreiten-Auslastungsgrads des Verbindungsereignisses der Verbindung Folgendes umfasst:
Anpassen des Bandbreiten-Auslastungsgrads der Verbindungsereignisse der Verbindungen entsprechend den Bandbreitenanforderungen der Verbindungen, wobei Längen der Verbindungsereignisse der Verbindungen gleich sind oder ein Mehrfachverhältnis aufweisen.

7. Verbindungs-Verarbeitungsverfahren, das in einem Netzwerk angewendet wird, das eine erste Vorrichtung und zwei oder mehr zweite Vorrichtungen umfasst, wobei die erste Vorrichtung mit jeder der zweiten Vorrichtungen über unabhängige drahtlose Verbindungen kommunikativ verbunden ist, wobei es eine Verbindung zwischen der ersten Vorrichtung und jeder der zweiten Vorrichtungen gibt; das Verfahren Folgendes umfassend:
Empfangen (S501) einer von der ersten Vorrichtung gesendeten Anforderung zur Aktualisierung eines Verbindungsparameters durch die zweite Vorrichtung;
Rücksenden (S502) von Verbindungsparameter-Aktualisierungsbestätigungsinformationen durch die zweite Vorrichtung an die erste Vorrichtung; wobei das Verfahren **gekennzeichnet ist durch**
Empfangen (S503) eines von der ersten Vorrichtung gesendeten Verbindungsparameter-Aktualisierungsbenachrichtigungspakets, wobei das Verbindungsparameter-Aktualisierungsbenachrichtigungspaket die Fenster-Bewegungsdistanz umfasst;
Bestimmen (S504), gemäß einem momentanen Zeitbereich-Bezugspunkt und der Fenster-Bewegungsdistanz, einer Zeitbereich-Bewegungsposition eines Ankerlinks;
Anpassen eines Verbindungsparameters der Verbindung entsprechend der Bewegungsposition des Ankerlinks, wobei das Anpassen Folgendes umfasst:
Anpassen eines Bandbreiten-Auslastungsgrads eines Verbindungsereignisses und/oder eines Verbindungsintervalls der Verbindung, ausgehend von der Bewegungsposition des Ankerlinks, so dass eine Summe von Längen der Verbindungsereignisse an allen Verbindungen nicht größer ist als ein minimales Verbindungsintervall zwischen den Verbindungen.

8. Verfahren nach Anspruch 7, wobei die erste Vorrichtung eine primäre Vorrichtung und die zweite Vorrichtung eine sekundäre Vorrichtung ist.

9. Verfahren nach Anspruch 7, wobei das Verfahren vor dem Bestimmen (S504) der Zeitbereich-Bewegungsposition des Ankerlinks gemäß dem momentanen Zeitbereich-Bezugspunkt und der Fenster-Bewegungsdistanz ferner Folgendes umfasst:
Verhandeln mit der ersten Vorrichtung über ein Verbindungsereignis der Verbindung, um den momentanen Referenzpunkt zu bestimmen.

10. Verfahren nach Anspruch 9, wobei das Bestimmen (S504) der Zeitbereich-Bewegungsposition des Ankerlinks gemäß dem momentanen Zeitbereich-Bezugspunkt und der Fenster-Bewegungsdistanz Folgendes umfasst:
Verschieben des Ankerlinks um eine Fenster-Verschiebungsdistanz nach hinten, wobei der momentane Referenzpunkt als Startposition verwendet wird.

## Revendications

1. Le procédé de traitement de liaison appliquée dans un réseau comprenant un premier dispositif et deux dispositifs secondaires ou plus, le premier dispositif étant connecté de manière communicative avec chacun des dispositifs secondaires par le biais de liaisons sans fil indépendantes, dans lequel il y a un lien entre le premier dispositif et chacun des dispositifs secondaires ; la méthode comprend :
l'envoi (S201), par le premier dispositif, une demande de mise à jour des paramètres de connexion à au moins un des dispositifs secondaires ;
la réception (S202), par le premier dispositif, des informations de confirmation de mise à jour des paramètres de connexion renvoyées par le dispositif secondaire en réponse à la demande de mise à jour des paramètres de connexion ; la méthode est **caractérisée par** ;
la détermination (S204), en fonction d'un point de référence instantané dans le domaine temporel et d'une distance de déplacement de la fenêtre, une position de déplacement dans le domaine temporel d'un point d'ancrage de lien lorsque le deuxième dispositif confirme la demande de mise à jour des paramètres de connexion ;
l'ajustement (S205) d'un paramètre de connexion de la liaison en fonction de la position mobile du point d'ancrage de la liaison, dans lequel l'ajustement comprend :
l'ajustement d'un cycle d'utilisation de la bande passante d'un événement de connexion et/ou d'un intervalle de connexion du lien en partant de la position mobile du point d'ancrage du lien, de sorte que la somme des longueurs des événements de connexion sur tous les liens ne soit pas supérieure à un intervalle de connexion minimum entre les liens ;
l'ajout (S206) de la distance de déplacement de la fenêtre à un ensemble de notifications de mise à jour des paramètres de connexion, et l'envoi de l'ensemble des notifications de mise à jour des paramètres de connexion au dispositif secondaire.

2. Procédé selon la revendication 1, dans laquelle, lorsque le premier dispositif est un dispositif primaire et que le second dispositif est un dispositif secondaire, la méthode comprend en outre :
la détermination (S203) de la distance de déplacement de la fenêtre en fonction de la longueur minimale d'un événement de connexion et de la longueur maximale d'un événement de connexion figurant dans la demande de mise à jour des paramètres de connexion.

3. Procédé selon la revendication 1, dans lequel avant de déterminer (S204), en fonction du point de référence instantané du domaine temporel et de la distance de déplacement de la fenêtre, la position de déplacement du domaine temporel du point d'ancrage du lien, la méthode comprend en outre :
la négociation avec le second dispositif par le biais d'un événement de connexion de la liaison pour déterminer le point de référence instantané.

4. Procédé selon la revendication 3, dans laquelle la détermination (S204), en fonction du point de référence instantané du domaine temporel et de la distance de déplacement de la fenêtre, de la position de déplacement du domaine temporel du point d'ancrage du lien comprend :
le déplacement du point d'ancrage du lien vers l'arrière d'une distance de déplacement de la fenêtre en utilisant le point de référence instantané comme position de départ.

5. Procédé selon la revendication 1, dans laquelle l'ajustement (S205) de l'intervalle de connexion du lien comprend :
l'ajustement des intervalles de connexion des liaisons en fonction des exigences de vitesse de réponse des liaisons, dans lequel les intervalles de connexion des liaisons sont égaux ou multiples.

6. Procédé selon la revendication 1, dans laquelle l'ajustement (S205) du cycle d'utilisation de la bande passante de l'événement de connexion de la liaison comprend :
l'ajustement des cycles d'utilisation de la bande passante des événements de connexion des liaisons en fonction des besoins en bande passante des liaisons, dans lequel les longueurs des événements de connexion des liaisons sont égales ou en relation multiple.

7. Le procédé de traitement de liaison appliquée dans un réseau comprenant un premier dispositif et deux dispositifs secondaires ou plus, le premier dispositif étant connecté de manière communicative avec chacun des dispositifs secondaires par le biais de liaisons sans fil indépendantes, dans lequel il y a un lien entre le premier dispositif et chacun des dispositifs secondaires ; la méthode comprend :
la réception (S501), par le second dispositif, d'une demande de mise à jour des paramètres de connexion envoyée par le premier dispositif ;
le renvoi (S502), par le deuxième dispositif, des informations de confirmation de mise à jour des paramètres de connexion au premier dispositif ; le procédé est **caractérisé par**
la réception (S503) d'un ensemble de notifications de mise à jour des paramètres de connexion envoyé par le premier dispositif, dans lequel l'ensemble de notifications de mise à jour des paramètres de connexion comprend la distance de déplacement de la fenêtre ;
la détermination (S504), en fonction d'un point de référence instantané dans le domaine temporel et de la distance de déplacement de la fenêtre, d'une position de déplacement dans le domaine temporel d'un point d'ancrage de lien ;
l'ajustement d'un paramètre de connexion du lien en fonction de la position mobile du point d'ancrage du lien, dans lequel l'ajustement comprend :
l'ajustement d'un cycle d'utilisation de la bande passante d'un événement de connexion et/ou d'un intervalle de connexion du lien, en partant de la position mobile du point d'ancrage du lien, de sorte que la somme des longueurs des événements de connexion sur tous les liens ne soit pas supérieure à un intervalle de connexion minimum entre les liens.

8. Procédé selon la revendication 7, dans laquelle le premier dispositif est un dispositif primaire et le second dispositif est un dispositif secondaire.

9. Procédé selon la revendication 7, dans lequel avant de déterminer (S504), en fonction du point de référence instantané du domaine temporel et de la distance de déplacement de la fenêtre, la position de déplacement du domaine temporel du point d'ancrage du lien, la méthode comprend en outre :
la négociation avec le premier dispositif par le biais d'un événement de connexion de la liaison pour déterminer le point de référence instantané.

10. Procédé selon la revendication 9, dans laquelle la détermination (S504), en fonction du point de référence instantané du domaine temporel et de la distance de déplacement de la fenêtre, de la position de déplacement du domaine temporel du point d'ancrage du lien, comprend :
le déplacement du point d'ancrage du lien vers l'arrière d'une distance de déplacement de la fenêtre en utilisant le point de référence instantané comme position de départ.
